# FASCICULE DE BREVET EUROPEEN

(11) **EP 1 370 598 B1**
(45) Date de publication et mention de la délivrance du brevet: **27.04.2016**
(21) Numéro de dépôt: 02714274.4
(22) Date de dépôt: 04.03.2002
(51) Int. Cl.: C08G 18/54, C08G 18/62, C08G 18/78, C08G 18/80, C09D 175/04, C09D 133/00

(54) **PROCEDE DE REALISATION D'UN REVETEMENT ET COMPOSITION POUR REVETEMENTS RETICULABLES**
VERFAHREN ZUR HERSTELLUNG EINER BESCHICHTUNG UND ZUSAMMENSETZUNG FÜR VERNETZBARE BESCHICHTUNGEN
METHOD FOR PRODUCING A COATING AND COMPOSITION FOR CROSSLINKABLE COATINGS

(30) Priorité: 02.03.2001 FR 0102912
(43) Date de publication de la demande: 17.12.2003
(73) Titulaire: Vencorex France, 69800 Saint-Priest (FR)
(72) Inventeur: BERNARD, Jean-Marie, F-69440 MORNANT (FR); VARRON, Corinne, F-69003 LYON (FR)
(74) Mandataire: Colombet, Alain André
(86) Numéro de dépôt international: PCT/FR2002/000775
(87) Numéro de publication internationale: WO 2002/070580

(56) Documents cités:
- DE-A- 3 122 030
- US-A- 4 102 847
- US-A- 5 521 272
- US-A- 5 981 074

## Description

L'invention concerne des revêtements réticulables à base de polymères comprenant des groupes hydroxyles et d'agents réticulants à base de polyisocyanates et de résines amine/formaldéhyde.

Les revêtements polyuréthanes obtenus par réticulation entre les fonctions hydroxyles du polyol et les fonctions isocyanates d'un polyisocyanate oligomère sont largement utilisés pour leurs propriétés de dureté, durabilité, résistance aux agents chimiques et aux chocs.

On connaît également des compositions de revêtement dans lesquelles l'agent réticulant est constitué par des résines amine/formaldéhyde qui réagissent avec les fonctions hydroxyles du polyol pour former un réseau. Toutefois, les caractéristiques mécaniques des revêtements obtenus sont souvent peu satisfaisantes. De plus, ces revêtements ont tendance à être sensibles à la température de cuisson, ce qui n'est pas sans poser des problèmes d'application.

On connaît par ailleurs de FR 2 322 911 des compositions pour vernis à cuire comprenant un mélange de polymères contenant des groupes hydroxyles, de résines de type amine/formaldéhyde et de polyisocyanates, dans lesquelles le polyisocyanate peut comprendre des composés comportant un groupe biuret. Toutefois, les vernis obtenus présentent une dureté peu satisfaisante.

L'invention a pour but de proposer des compositions pour revêtements, notamment des peintures ou vernis qui présentent une dureté élevée.

Un autre but de l'invention est de fournir des revêtements qui présentent une flexibilité importante.

Un autre but de l'invention est de fournir des revêtements qui présentent une résistance aux chocs élevée.

Un autre but est de fournir des revêtements qui présentent une résistance plus élevée à l'attaque chimique ; plus précisément des revêtements qui présentent une résistance supérieure ou égale à la cotation 3 (c'est-à-dire une cotation 3, 2, 1 ou zéro), pour chacune des attaques ci-après :
- attaque à l'acide sulfurique ;
- attaque à l'acide acétique ;
- attaque à l'ammoniaque ;
- attaque à l'éthanol ; et
- attaque à la butanone.
(le système de cotation est détaillé dans la suite de la description et dans les exemples).

Un autre but est de fournir des revêtements et des compositions de liants précurseurs qui présentent une résistance à l'attaque à la butanone égale ou de préférence supérieure à la cotation 2 (une résistance supérieure à la cotation 2, correspondant à une cotation inférieure à 2).

Un autre but encore est de fournir des compositions pour revêtements qui sont stables en pot et qui peuvent être mises en oeuvre dans des systèmes à un composant dites « 1 K », c'est-à-dire dans lesquels l'ensemble des composants de revêtement, notamment les composés réticulables, sont présents dans un même système.

L'invention a pour objet un procédé de réalisation d'un revêtement présentant une dureté, une résistance aux chocs et une résistance à l'attaque chimique élevées, caractérisé en ce qu'il comprend l'application sur un substrat d'un mélange pour addition simultanée ou successive selon revendication 1 :
et le chauffage dudit substrat à une température permettant la réticulation desdits composants.

On entend par dureté élevée au sens de l'invention une dureté supérieure à 200 s (dureté Persoz), mesurée une heure après la cuisson du revêtement (cuisson minimale : 30 minutes à 140°C).

On entend par résistance aux chocs élevée, une résistance supérieure à 8 (embouti Erichsen).

De manière surprenante, les inventeurs ont, en outre, découvert que des revêtements présentant les propriétés précitées pouvaient être obtenus lorsque l'on utilisait comme agent réticulant une composition polyisocyanate dans laquelle au moins une partie des groupes isocyanates étaient masquées par un agent masquant, l'agent masquant réagissant totalement ou en partie lors de sa libération du groupe isocyanate avec la résine amine-formaldéhyde et participant ainsi à la formation du réseau sans entraîner de défauts dans le film de revêtement après durcissement de celui-ci, et en limitant la quantité de COV (composés organiques volatils).

Au moins 50% et jusqu'à 100% en moles des fonctions isocyanates sont masquées par un agent masquant ou un mélange d'agents masquants, de préférence monofonctionnels.

Le composant (A) est avantageusement un polyol ayant un taux d'hydroxyle compris entre 1 et 5 g/100 g, avantageusement entre 3,5 et 4,5 g/100 g exprimé par rapport à l'extrait sec.

On peut utiliser à cet effet des polyacrylates contenant des groupes hydroxyles, des polyesters ou des alkydes, ou leurs mélanges. On préfère tout particulièrement les polyacrylates contenant des groupes hydroxyles, dont la masse moléculaire Mw va de 3 000 à 50 000, avantageusement de 5 000 à 30 000. Il est également préférable que la masse moléculaire Mn aille de 2 000 à 20000, de préférence de 3 000 à 10000.

La mesure de la masse moléculaire (Mw) est faite par chromatographie en phase gazeuse (CPG) en prenant le polystyrène comme référence. Cette méthode permet d'obtenir en même temps Mw (masse moléculaire moyenne) et Mn (nombre de molécules de masse moléculaire moyenne). Le solvant d'élution est le tétrahydrofurane (THF).

Ces polyols sont tels que décrits aux pages 40 à 49 de "Waterborne & Solvent based surface coating resins and their application", Vol. III ; John Wyley & Sons, (1998).

Le polymère polyol est généralement en solution dans un solvant organique. Comme solvant, on peut citer en particulier les esters, hydrocarbures aromatiques, éthers, éther esters ou amides. On peut aussi utiliser des solutions, émulsions ou dispersions aqueuses de polyols ou des formulations hydro-organiques.

Selon un mode avantageux de la présente invention, il peut s'agir de polyol à haut extrait sec (E.S.), dont l'E.S. est compris entre 60 et 100%.

Le constituant A est présent dans les compositions selon l'invention en une teneur avantageusement comprise entre 10 et 60% avantageusement 20 et 40% d'extrait sec par rapport au poids total des composants (A), (B), (C) et (D).

Le constituant B est une résine du type amine/formaldéhyde, de préférence un précondensat au moins partiellement éthérifié de formaldéhyde et de mélamine ou d'urée. Les produits liquides, sans solvant, peuvent être utilisés en vue de l'application de vernis ou peintures à teneur élevée en matières solides. Mais on préfère utiliser les résines usuelles d'amine et de formaldéhyde contenant des solvants ou des solutions, dispersions ou émulsions aqueuses ou hydro-organiques. On peut utiliser comme amines des triazines, triazoles, diazines, guanidines ou guanamines, par exemple la N,N'-diméthylurée, l'acétylène-diurée, le dicyanamide, la benzoguanamine ou les mélamines substituées par des alkyles.

Au moins une partie, de préférence la totalité, de toutes les fonctions hydroxyles des précondensats amine/formaldéhyde est éthérifiée. Ces fonctions éthers mixtes portent donc d'une part la chaîne du précondensat et d'autre part une chaîne hydrocarbonée. Cette chaîne hydrocarbonée est avantageusement reliée à ladite fonction éther par l'intermédiaire d'un carbone d'hybridation sp³ ; avantageusement elles présentent au plus 10 atomes de carbones, de préférence au plus 5 atomes de carbone. On peut notamment citer comme chaînes hydrocarbonées le méthyle, l'éthyle, les propyles, les butyles (notamment le n-butyle) ou le benzyle.

La résine d'amine et de formaldéhyde est préparée de manière connue par condensation catalysée par les acides, le formaldéhyde aqueux étant utilisé de préférence. On trouvera des détails par exemple dans l'ouvrage d'Houben-Weyl, "Methoden der Organischen Chemie", (1963), volume 14/2, pages 319 et suivantes.

Il est préférable que lesdits précondensats amine/formaldéhyde soient réalisés avec un excès (en général léger) de formol, ce qui permet notamment de maximiser les fonctions hydroxyles terminales. En général, le formol résiduel après la condensation est compris dans l'intervalle allant de 1 pour mille à 2 pour cent en masse du précondensat.

Ainsi, une résine mélamine-formaldéhyde particulièrement préférée est une résine présentant une fonctionnalité d'au moins 6, une viscosité dynamique (DIN 53177, 23°C) de 500 à 2 500 mPa.s, une compatibilité au n-heptane comprise entre 2,0 et 5,0 mUg, une teneur en formaldéhyde libre inférieure à 1% et une masse volumique d'environ 1 g/mL.

On peut citer tout particulièrement les résines commercialisées par la société Vianova Resins, maintenant Solutia, sous la dénomination MAPRENAL®.

Le composant (B) est utilisé en une teneur comprise entre 3 et 20% en poids d'extrait sec par rapport au poids total des composants (A), (B), (C), (D) et (E).

Le composant (B) est généralement en solution dans un solvant organique, notamment un alcool.

Le composant (C) est une composition polyisocyanate comprenant au moins 50% en poids, de préférence au moins 60%, en poids de composés polyisocyanates comportant au moins un groupe biuret.

La composition polyisocyanate est avantageusement obtenue par polycondensation, avantageusement di- ou tri-condensation catalytique d'isocyanates monomères de départ en présence d'eau, d'un alcool ou d'une amine.

La composition polyisocyanate peut contenir des polyisocyanates dont le nombre de fonctions isocyanates (NCO) par molécule est supérieur ou égal à 2, tels que le 4-isocyanatométhyl-1,8-diisocyanato -octam éthylène ou l'isocyanato-éthylester du diisocyanate de lysine.

La composition polyisocyanate contient avantageusement au moins 15% en poids d'un composé de formule (I) : 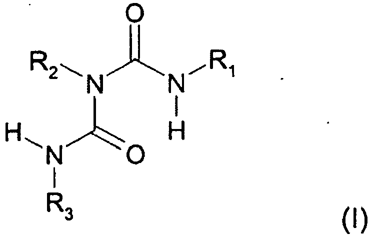 dans laquelle R₁, R₂ et R₃, identiques ou différents, représentent un atome d'hydrogène, une chaîne hydrocarbonée en C₁-C₂₀, linaire, ramifiée ou cyclique éventuellement substituée, de préférence par une ou deux fonctions isocyanates et/ou éventuellement par un groupe dérivé d'une fonction isocyanate, à savoir un groupe carbamate, allophanate, isocyanurate, urétidione, imino-oxadiazine-dione ou oxadiazine-trione, sous réserve qu'au plus un seulement de R₁, R₂ et R₃ représente un atome d'hydrogène.

La composition selon l'invention comprend avantageusement au moins 15%, avantageusement au moins 30% et de préférence au moins 50%, en poids, de composés de formule (I), dans laquelle R₁, R₂ et R₃ identiques ou différents sont des chaînes hydrocarbonées, linéaires, ramifiées ou cycliques en C₁-C₂₀, comprenant avantageusement une fonction isocyanate. Ces composés sont également désignés par "biurets vrais".

La composition polyisocyanate de l'invention contient également avantageusement de 10 à 70%, de préférence de 15 à 60% en poids de composés comprenant plus d'un groupe biuret, à savoir des composés de formule générale (I) dans lesquels l'un au moins de R₁, R₂ et R₃ comprend un groupe biuret de formule :

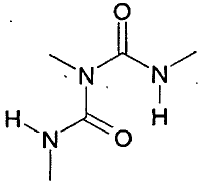

La composition polyisocyanate de l'invention comprend en outre avantageusement de 0 à 80 %, de préférence de 0 à 50% en poids de composés isocyanurates comprenant un ou plusieurs cycles isocyanurates.

Avantageusement, la composition polyisocyanate contient de 0 à 50%, de préférence de 0 à 30% en poids de composés monoisocyanurates.

La composition polyisocyanate contient en outre :
- de 0 à 50%, avantageusement de 0,5 à 30% en poids de composés comportant un groupe mono-urétidione,
- de 0 à 50%, avantageusement de 0 à 30% en poids de composés comportant un groupe allophanate ;
- de 0 à 30%, avantageusement de 0 à 5% en poids de monomères n'ayant pas réagi.

La teneur en isocyanates monomères est fonction de la volatilité de ceux-ci. On travaille de préférence avec une faible teneur (avantageusement au plus 1% en masse) en monomères lorsque ceux-ci sont volatils.

Lorsqu'on ne souhaite pas travailler avec de faibles teneurs en isocyanates monomères, on peut alors choisir des monomère très peu volatils, en particulier des monomères triisocyanates.

Les compositions polyisocyanates de l'invention peuvent être obtenues par un procédé comportant les étapes suivantes :
a) polycondensation, de préférence tricondensation d'un mélange d'isocyanates monomères de départ en présence d'un catalyseur de tricondensation, d'un composé choisi parmi l'eau (l'eau ou les composés dégageant de l'eau dans le mélange réactionnel étant préférés), un alcool ou une amine, en présence ou avantageusement en l'absence de solvant, dans les conditions habituelles ;
b) arrêt de la réaction au taux de transformation souhaité des fonctions NCO, généralement de 2 à 50%, avantageusement de 5 à 40%, de préférence de 10 à 30% des fonctions NCO;
c) éventuellement élimination des monomères n'ayant pas réagi.

On pourra se référer également aux procédés décrits dans EP-A-0 259 233 ou US 5,103,045.

Le catalyseur de tricondensation est avantageusement un catalyseur de formation de fonction biuret et en particulier des acides de force moyenne ayant un pKa au moins égal à 1, avantageusement à 2 (par exemple les acides phosphoriques ou phosphonique), de préférence à 3, ou encore un acide carboxylique tel que décrit dans FR 86/12 524.

Pour obtenir une composition polyisocyanate masquée, on ajoute au milieu réactionnel, avant ou pendant l'étape a), après l'étape b) ou après l'étape c) un agent masquant ou mélange d'agents masquants, de préférence monofonctionnels, en une quantité correspondant à la proportion de fonctions isocyanates que l'on souhaite masquer et on laisse réagir les réactifs dans les conditions de réaction de la fonction isocyanate avec l'hydrogène réactif de l'agent masquant selon le schéma

Am-H + ISO-N=C=O → Am-CO-NH-ISO,

ISO étant tel que défini ci-dessus et Am représentant le reste de l'agent masquant après enlèvement de l'hydrogène réactif.

Les agents masquants les plus couramment utilisés sont ceux cités par M. Wicks dans son article "Blocked isocyanates", Progress in Organic Coatings, (1975), vol. 3, p. 73, leurs températures de déblocage étant avantageusement supérieures à 50°C, de préférence aux alentours de 90°C.

Les agents masquants peuvent se répartir en trois groupes :
- ceux dont l'hydrogène mobile est porté par un chalcogène ;
- ceux dont l'hydrogène mobile est porté par un azote ;
- ceux dont l'hydrogène mobile est porté par un carbone.

Parmi ceux dont l'hydrogène mobile est porté par un chalcogène (de préférence léger, à savoir soufre et oxygène), on utilise surtout ceux où le chalcogène est un oxygène. Parmi ces derniers, on peut notamment citer :
- les produits à séquence >N-OH, comme par exemple les oximes (=N-OH) ou les hydroxyimides ([-CO-]₂N-OH) ; et
- les phénols, surtout ceux dont le noyau aromatique est appauvri en électron tel que les hydroxypicolines et les hydroxybenzoates (par exemple EP-A-680 984 et WO 98/4608).

On peut également citer les composés décrits dans la demande EP-A-0 661 278.

Parmi ceux dont l'hydrogène mobile est porté par un azote, on peut notamment citer :
- les amides monosubstitués, et en particulier les lactames (le plus utilisé étant le caprolactame) ;
- les imides ([-CO-]₂N-H), surtout cycliques comme le succinimide ;
- les hétérocycles azotés insaturés, notamment à cinq chaînons (avantageusement doublement insaturés), comportant de préférence au moins deux hétéroatomes (de préférence de l'azote). Parmi ces derniers, on peut citer les diazoles (tels les glyoxalines, les imidazoles et les pyrazoles), les triazoles, voire les tétrazoles comportant éventuellement un ou plusieurs substitutants. Ce groupe d'agents masquants est particulièrement préféré. On peut citer tout particulièrement le pyrazole et ses dérivés comportant un ou plusieurs substituants, notamment des groupes alkyles, par exemple le 3,5-diméthylpyrazole.

On peut également citer les composés décrits dans la demande EP-A-0 661 278.

Parmi ceux dont l'hydrogène mobile est porté par un carbone, on peut citer essentiellement les composés de nature malonique, c'est-à-dire un radical RCH< portant deux groupes électro-attracteurs (tels que carbonyle, nitrile, Rf ou perfluoro-alcoyle).

On peut citer à ce titre notamment les couples d'agents masquants suivants : méthyl-amyl-cétoxime/2-hydroxypyridine et diméthyl-pyrazole/2-hydroxypyridine.

La présente invention n'est pas limitée à la nature des isocyanates monomères mise en oeuvre. Ainsi, les isocyanates monomères peuvent être des diisocyanates ou des triisocyanates aliphatiques, y compris cycloaliphatiques et tels que :
- les polyméthylènediiosocyanates et notamment l'hexaméthylène diisocyanate (HDI), le 2-méthylpentaméthylène diisocyanate, le 4-isocyanatométhyloctaméthylène diisocyanate, le 2,4,4-triméthyl-hexaméthytène-diisocyanate ;
- l'isophorone diisocyanate (IPDI), le norbornane diisocyanate (NBDI), le 1,3-bis(isocyanatométhyl)cyclohexane (BIC), le 4,4'-diisocyanatodicyclohexylméthane (H₁₂-MDI) et le cyclohexyl-1,4-diisocyanate (CHDI).

Les isocyanates préférés visés par l'invention sont ceux dans lesquels au moins une, avantageusement deux, de préférence trois des conditions ci-après sont remplies :
- au moins une, avantageusement deux, des fonctions NCO sont reliées à un squelette hydrocarboné, par l'intermédiaire d'un carbone saturé (sp³) ;
- au moins un, avantageusement deux, desdits carbones saturés (sp³) est porteur d'au moins un, avantageusement deux hydrogène(s). En d'autres termes il a été trouvé que l'on obtenait de meilleurs résultats lorsque le carbone porteur de la fonction isocyanate était porteur d'un hydrogène, de préférence de deux hydrogènes ; il est en outre même préférable que lesdits carbones saturés (sp³) soient au moins pour le tiers, avantageusement au moins pour la moitié, de préférence au moins pour les deux tiers, reliés audit squelette par un atome de carbone lui-même porteur d'au moins un hydrogène, plus préférentiellement deux ;
- tous les carbones intermédiaires à partir desquels les fonctions isocyanates sont reliées au squelette hydrocarboné, sont des carbones saturés (sp³), lesquels sont avantageusement en partie, de préférence en totalité, porteurs d'un hydrogène, de préférence de deux hydrogènes. Il est en outre même préférable que lesdits carbones saturés (sp³) soit au moins pour le tiers, avantageusement au moins pour la moitié, de préférence au moins pour les deux tiers, reliés audit squelette par un atome de carbone lui-même porteur d'au moins un hydrogène, plus préférentiellement deux.

De manière générale, les isocyanates de départ (monomères) préférés sont ceux comportant au moins un enchaînement polyméthylène (comprenant de 2 à 6 chaînons méthylène).

On préfère les isocyanates, en particulier les diisocyanatesaliphatiques, notamment les isocyanates d'alkyle en C₁-C₁₀ dans laquelle la chaîne alkyle est linéaire ou faiblement ramifiée. Par "faible ramification", on entend l'absence de carbone tertiaire et/ou néopentylique.

L'HDI, l'IPDI, le NBDI, l'H₁₂-MDI et MPDI sont particulièrement préférés.

Le composant (C) est généralement dilué dans un solvant, de sorte que l'extrait sec de la composition soit compris entre 60 'et 75% en poids.

Le composant (D) peut être choisi parmi l'un ou plusieurs des composés suivants : les esters de cellulose, les agents d'étalement, les plastifiants, les huiles de silicone, les agents thixotropes, les agents de mouillage et les agents de mar-résistance, les pigments ou les charges, par exemple le dioxyde de titane, le noir de carbone, les pigments colorés organiques ou minéraux, le talc ou le sulfate de baryum et les catalyseurs de réticulation, agents anti-UV, etc.

Des exemples de catalyseurs appropriés sont, d'une part, les acides sulfoniques, notamment les acides méthane-sulfoniques ou les acides trifluorométhane-sulfoniques, par exemple l'acide para-toluène sulfonique, d'autre part, certains composés de l'étain, comme le dilaurate de dibutylétain ou des formes latentes de ces composés tels que les sels d'acide paratoluène-sulfonique, d'acides méthane-sulfoniques ou d'acides perfluoro-alcane-sulfoniques.

On peut aussi utiliser des formes latentes de ces catalyseurs tel que les sels d'amines de ces acides forts.

Les catalyseurs de réticulation sont présents dans une proportion allant de 0 à 3%, de préférence de 0 à 1 % en poids.

Le composant (D) peut être contenu dans les proportions de 0 à 65%, de préférence 0 à 50% en poids.

Avantageusement, le rapport des fonctions isocyanates aux fonctions hydroxyles est inférieur à 3, avantageusement inférieur à 2, de préférence compris entre 0,3 et 1,5.

L'invention a également pour objet une composition de revêtement, caractérisée en ce qu'elle comprend
A) de 20 à 50% en poids d'extrait sec d'un polymère contenant des groupes hydroxyles ; et
B) de 3 à 20% en poids d'extrait sec d'une résine de type amine-formaldéhyde ;
C) de 5 à 20% en poids d'extrait sec d'une composition polyisocyanate contenant au moins 50% en moles de groupe(s) biuret(s), dans laquelle au moins 10%, avantageusement au moins 20%, de préférence au moins 50% des groupes isocyanates sont protégés à l'aide d'un agent masquant monofonctionnel
D) de 0 à 30% en poids d'extrait sec d'additifs divers pour revêtement ;
E) de 10 à 20% en poids de solvants.

Les composants (A), (B), (C) et (D) sont tels que définis ci-dessus. Le composant (E) comprend outre les solvants décrits ci-dessus de formulation des composants (A) et (B), éventuellement un ou plusieurs autres solvants pour la formulation de la composition de revêtement finale, l'acétate de n-butyle, l'acétate d'éthylèneglycol, la méthyléthylcétone ou le xylène.

Les exemples ci-après illustrent l'invention sans toutefois la limiter.

### Exemple 1 : Formulation pour revêtement

On mélange et homogénéise dans l'ordre les ingrédients suivants :

| | Mélange 1 | Mélange 2 (comparatif) |
|---|---|---|
| VIACRYL SC 370/75 SNA* | 50,35 | 50,35 |
| n-BUTANOL | 3,50 | 3,50 |
| SOLVESSO 150 | 7,00 | 7,00 |
| SOLVESSO 100 | 9,10 | 9,10 |
| MAPRENAL VMF 3611/70B** | 23,15 | - |
| XYLENE/BUTANOL (7/3) | 5,30 | 5,30 |

| | | |
|---|---|---|
| * polyol, E.S. = 75 % OH sec : 3.64 % ** résine mélamine-formaldéhyde. | | |

On prépare diverses formules de vernis en ajoutant au mélange 1 ou au mélange 2 une composition polyisocyanate 1 (PIC 1) comportant 100% des fonctions isocyanates masquées par le 3,5-diméthylpyrazole (3,5-DMP) ayant la composition suivante avant masquage:

| ***Composition PIC 1*** | **% *en poids (extrait sec)*** |
|---|---|
| HDI résiduel | 0,25 |
| Dimère d'HDI | 2,46 |
| HDI-biuret | 33,0 |
| HDI-Bisbiuret | 17,7 |
| Lourds (en Tris-Biuret) | 21,6 |

On prépare parallèlement des formules de vernis (exemple comparatif) en ajoutant aux mélanges 1 et 2 ci-dessus une composition polyisocyanate PIC 2 ayant une composition identique, sauf que le biuret est remplacé par de l'isocyanurate dans l'HDI-biuret, l'HDI-bisbiuret et les lourds.

**FORMULES VERNIS E.S. = 48%**

| | | | | |
|---|---|---|---|---|
| NCO/OH | 1,05 | 1,05 | 1,05 | 1,05 |
| Mélange 1 | 50 | 50 | - | - |
| Mélange 2 (comp) | - | - | 40 | 40 |
| APTS à 1% | 2,40 | 2,40 | 1,92 | 1,92 |
| Xylène | 3,83 | 1,94 | 5,84 | 4,33 |
| PIC 2 | 9,05 | - | 7,24 | - |
| PIC 1 | - | 10,80 | - | 8,64 |

### Exemple 2: Propriétés de revêtements obtenus avec les compositions de l'invention

On applique sur des supports en verre ou acier les compositions de vernis ci-dessus à l'aide d'un filmographe à spirale de 100 µm pour le support en acier et pour les plaques de verre.

On effectue des cuissons à 140°C et 150°C pendant 30 minutes, après 30 minutes de désolvatation.

Après 7 jours à température ambiante, on mesure les propriétés suivantes
- dureté (Persoz) ;
- flexibilité ;
- résistance aux chocs.

**TABLEAU I : Dureté PERSOZ, sur plaque de verre**

| | | Mélange 1 | | Mélange 2 (comp) | |
|---|---|---|---|---|---|
| | | PIC 2 | PIC 1 | PIC 2 | PIC 1 |
| | NCO/OH | 1,05 | 1,05 | 1,05 | 1,05 |
| T0+1H | 140°C | 279 | 322 | 353 | 317 |
| | 150°C | 337 | 357 | | |
| T0+48H | 140°C | 303 | 331 | 350 | 321 |
| | 150°C | 361 | 365 | | |
| T0+7J | 140°C | 321 | 330 | 351 | 321 |
| | 150°C | 358 | 366 | | |

**TABLEAU II: Dureté PERSOZ, sur plaque acier R46**

| | | Mélange 1 | | Mélange 2 (comp) | |
|---|---|---|---|---|---|
| | | PIC 2 | PIC 1 | PIC 2 | PIC 1 |
| | NCO/OH | 1,05 | 1,05 | 1,05 | 1,05 |
| T0+1H | 140°C | 244 | 263 | 273 | 268 |
| | 150°C | | 291 | | |
| T0+48H | 140°C | 257 | 274 | 288 | 273 |
| | 150°C | | 299 | | |
| T0 + 7J | 140°C | 249 | 271 | 284 | 270 |
| | 150°C | | 301 | | |

**TABLEAU III : Tests de flexibilité sur plaques acier R46**

| | | Mélange 1 | | Mélange 2 | |
|---|---|---|---|---|---|
| | | PIC2 | PIC1 | PIC2 | PIC1 |
| | NCO/OH | 1,05 | 1,05 | 1,05 | 1,05 |
| Épaisseur µm | 140°C | 39 | 40 | 29 | 32 |
| | 150°C | | 39 | | |
| Embouti ERICHSEN | 140°C | 8.4 | 8.3 | 8.1 | 8.5 |
| | 150°C | | 8.0 | | |
| CHOCS | AFNOR | 15 | 25 | 5 | 15 |
| | ASTM | 24 | 14 | 6 | 8 |
| CHOCS | AFNOR | 20 | 50 | <5 | 5 |
| | ASTM | 18 | 46 | <4 | 8 |
| QUADRILLAGE | 30mn 140°C | 0 | 0 | 0 | 0 |

Les valeurs supérieures ou égales à "9" ne sont pas à considérer, car le piston de l'embouti passe à travers la plaque.

**TABLEAU IV: Résistance aux agents chimiques**

| | Mélange 1 | Mélange 2 |
|---|---|---|
| Durcisseur | PIC 1 | PIC 1 |
| **30 min à 140°C** | | |
| NCO/OH | 1,05 | 1,05 |
| Acide acétique 25%-1h | 0-1 | 5 |
| Ac. Sulfurique 10%-1h | 1- | 5 |
| Ammoniaque 10%-1 h | 1- | 1- |
| Ethanol 1 h | 1 | 1- |
| MEK 3 min | 1 | 1 |

| **30 min à 150°C** | | |
|---|---|---|
| NCO/OH | 1,05 | 1,05 |
| Acide acétique 25%-1 h | 1- | 5 |
| Ac. Sulfurique 10%-1 h | 0 | 5 |
| Ammoniaque 10%-1 h | 1- | 1 |
| Ethanol 1h | 1 | 1 |
| MEK 3 min | 1 | 4 |

### Cotation de 0 à 5:

0 : le film n'est pas attaqué, le solvant ne laisse aucune trace.
1: le film est très légèrement attaqué après évaporation du solvant, on note une marque sur le pourtour de la goutte. La partie intérieure est identique au reste du film en aspect et au toucher (avant l'évaporation totale, le toucher est légèrement happant).
2 : le film est attaqué après évaporation du solvant, on note que l'emplacement de la goutte est louche ou que le film est happant même après évaporation du solvant.
3 : le film est plissé signe que la réticulation n'est pas totale ni homogène.
4 : le film est dissous après évaporation du solvant, on note un bourrelet à la périphérie de la goutte. A l'intérieur, le film est poisseux au toucher et ne présente pas de cohésion.
5: on voit le support après évaporation du solvant, on note un bourrelet à la périphérie de la goutte. A l'intérieur, le film est détruit et on voit le support.

Il apparaît clairement que les résultats obtenus avec la composition 1 sont meilleurs que les résultats obtenus avec la composition 2.

Pour les mélanges sans résine amine-formaldéhyde, les compositions base d'isocyanate(s) (PIC 2) donnent de meilleurs résultats alors que lorsque l'on utilise une résine mélamine-formaldéhyde, les compositions contenant du biuret donnent dans tous les cas des résultats au moins aussi bons et souvent meilleurs.

## Revendications

1. Procédé de réalisation d'un revêtement présentant une dureté, une résistance aux chocs et une résistance à l'attaque chimique élevée, **caractérisé en ce qu'**il comprend
▪ l'application sur un substrat d'un mélange pour addition simultanée ou successive comportant :
A) de 20 à 50 % en poids d'extrait sec d'un polymère contenant des groupes hydroxyles ; et
B) de 3 à 20 % en poids d'extrait sec d'une résine de type amine-formaldéhyde ;
C) de 5 à 20 % en poids d'extrait sec d'une composition polyisocyanate contenant au moins 50 % en moles de groupe(s) biuret(s), dans laquelle au moins 50 % en moles et jusqu'à 100% en moles des groupes isocyanates sont protégés à l'aide d'un agent masquant monofonctionnel ;
D) de 0 à 30 % en poids d'extrait sec d'additifs divers pour revêtement
E) de 10 à 20 % en poids de solvant(s) ;
▪ et le chauffage dudit substrat à une température permettant la réticulation desdits composants.

2. Procédé selon l'une quelconque des revendications précédentes, **caractérisé en ce que** l'agent masquant est choisi parmi les composés hétérocycliques azotés.

3. Procédé selon la revendication 2, **caractérisé en ce que** l'agent masquant est un pyrazole éventuellement substitué par un ou plusieurs substituants.

4. Procédé selon la revendication 3, **caractérisé en ce que** l'agent masquant est le 3,5-diméthylpyrazole.

5. Procédé selon la revendication 1, **caractérisé en ce que** le polymère (A) est un polyol acrylique ayant un taux d'hydroxyle compris entre 1 et 5 g/100 g, de préférence entre 3,5 et 4,5 g/100 g d'extrait sec de polymère.

6. Procédé selon l'une quelconque des revendications précédentes, **caractérisée en ce que** le polymère (A) est un polyol acrylique ayant un poids moléculaire compris entre 1000 et 5 000.

7. Procédé selon l'une quelconque des revendications précédentes, dans laquelle le constituant (B) est une résine formaldéhyde-mélamine.

8. Procédé selon l'une quelconque des revendications précédentes, dans laquelle le composant (C) est le produit de polycondensation d'un di- ou tri-isocyanate aliphatique ou cycloaliphatique.

9. Procédé selon la revendication 8, **caractérisée en ce que** le composant (C) est le produit de polycondensation d'un diisocyanate.

10. Procédé selon l'une quelconque des revendications précédentes, **caractérisé en ce que** l'extrait sec du composant (A) est compris entre 10 et 60%, par rapport au poids des composants (A), (B), (C), et (D).

11. Procédé selon l'une quelconque des revendications précédentes, **caractérisé en ce que** l'extrait sec du composant (D) est compris entre 0 et 65%, par rapport au poids des composants (A), (B), (C), et (D).

12. Procédé selon l'une quelconque des revendications précédentes, **caractérisé en ce que** le composant (C) comprend au moins 50%, avantageusement au moins 60% de composés polyisocyanates comprenant au moins un groupe biuret, par rapport au poids total des composés polyisocyanates.

13. Procédé selon l'une quelconque des revendications précédentes, **caractérisé en ce que** le composant (C) comprend au moins 15%, avantageusement au moins 30% et de préférence au moins 50%, en poids, de composés de formule (I) : 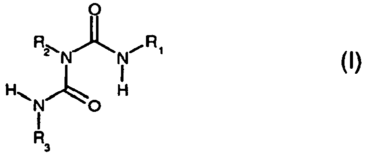 dans laquelle R₁, R₂ et R₃ identiques ou différents sont des chaînes hydrocarbonées, linéaires, ramifiées ou cycliques en C₁-C₂₀, comprenant avantageusement une fonction isocyanate.

14. Procédé selon l'une quelconque des revendications précédentes, **caractérisé en ce que** le rapport des fonctions isocyanates aux fonctions hydroxyles est inférieur à 3.

15. Composition de revêtement, **caractérisée en ce qu'**elle comprend :
A) de 20 à 50% en poids d'extrait sec d'un polymère contenant des groupes hydroxyles ; et
B) de 3 à 20% en poids d'extrait sec d'une résine de type amine-formaldéhyde ;
C) de 5 à 20 % en poids d'extrait sec d'une composition polyisocyanate contenant au moins 50% en moles de groupe(s) biuret(s), dans laquelle au moins 50% en moles des groupes isocyanates sont protégés à l'aide d'un agent masquant monofonctionnel ;
D) de 0 à 30% en poids d'extrait sec d'additifs divers pour revêtement ;
E) de 10 à 20% en poids de solvant(s).

16. Composition selon la revendication 15, **caractérisée en ce que** l'agent masquant est choisi parmi les composés hétérocycliques azotés.

17. Composition selon la revendication 15, **caractérisée en ce que** l'agent masquant est un pyrazole éventuellement substitué par un ou plusieurs substituants.

18. Composition selon la revendication 15, **caractérisée en ce que** l'agent masquant est le 3,5-diméthylpyrazole.

19. Composition selon la revendication 15, **caractérisée en ce que** le polymère (A) est un polyol acrylique ayant un taux d'hydroxyle compris entre 1 et 5 g/100 g, de préférence entre 3,5 et 4,5 g/100 g d'extrait sec de polymère.

20. Composition selon la revendication 15, **caractérisée en ce que** le polymère (A) est un polyol acrylique ayant une masse moléculaire comprise entre 30 000 et 5 000.

21. Composition selon la revendication 15, **caractérisée en ce que** le composant (B) est une résine formaldéhyde-mélamine.

22. Composition selon la revendication 15, **caractérisée en ce que** le composant (C) est le produit de polycondensation d'un di- ou triisocyanate aliphatique ou cycloaliphatique.

23. Composition selon la revendication 22, **caractérisée en ce que** le composant (C) est le produit de polycondensation d'un diisocyanate.

24. Composition selon la revendication 15, **caractérisée en ce que** le composant (C) comprend au moins 50%, avantageusement au moins 60% de composés polyisocyanates comprenant au moins un groupe biuret, par rapport au poids total des composés polyisocyanates.

25. Composition selon l'une quelconque des revendications 15 à 24, **caractérisée en ce que** le composant (C) comprend au moins 15%, avantageusement au moins 30% et de préférence au moins 50%, en poids, de composés de formule (I) : 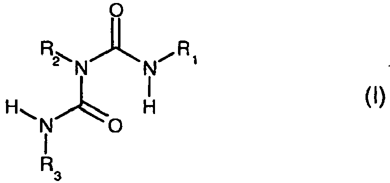 dans laquelle R₁, R₂ et R₃ identiques ou différents sont des chaînes hydrocarbonées, linéaires, ramifiées ou cycliques en C₁-C₂₀, comprenant avantageusement une fonction isocyanate.

26. Composition selon l'une quelconque des revendications 15 à 25, **caractérisée en ce que** le rapport des fonctions isocyanates aux fonctions hydroxyles est inférieur à 3.

## Patentansprüche

1. Ein Verfahren zur Herstellung einer Beschichtung mit Härte, Stoßwiderstand und erhöhtem Widerstand gegen chemischen Angriff, **gekennzeichnet dadurch, dass** es
▪ die Aufbringung auf ein Substrat einer Mischung zur simultanen oder sukzessiven Zugabe beinhaltend:
A) 20 bis 50 Gew.-% der Trockenmasse an Polymer enthaltend Hydroxylgruppen; und
B) 3 bis 20 Gew.-% der Trockenmasse an Harz vom Typ Aminformaldehyd,
C) 5 bis 20 Gew.-% der Trockenmasse an Polyisocyanat-Zusammensetzung enthaltend mindestens 50 Mol-% Biuret-Gruppe(n), wobei mindestens 50 Mol-% und bis 100 Mol-% Isocyanatgruppen mit einem monofunktionellen Maskierungsmittel geschützt sind;
D) 0 bis 30 Gew.-% der Trockenmasse an verschiedenen Zusätzen für Beschichtungen;
E) 10 bis 20 Gew.-% an Lösungsmittel(n);
▪ und das Heizen des Substrats auf eine Temperatur, die die Vernetzung der Komponenten ermöglicht,
umfasst.

2. Das Verfahren gemäß einem der voranstehenden Ansprüche, **gekennzeichnet dadurch, dass** das Maskierungsmittel ausgewählt ist aus Stickstoff-heterozyklischen Verbindungen.

3. Das Verfahren gemäß Anspruch 2, **gekennzeichnet dadurch, dass** das Maskierungsmittel ein Pryazol ist, wahlweise substituiert mit einem oder mehreren Substituenten.

4. Das Verfahren gemäß Anspruch 3, **gekennzeichnet dadurch, dass** das Maskierungsmittel 3,5-Dimethylpyrazol ist.

5. Das Verfahren gemäß Anspruch 1, **gekennzeichnet dadurch, dass** das Polymer (A) ein acrylisches Polyol mit einem Hydroxyl-Gehalt zwischen 1 und 5 g/100 g, vorzugsweise zwischen 3,5 und 4,5 g/100 g der Trockenmasse des Polymers ist.

6. Das Verfahren gemäß einem der voranstehenden Ansprüche, **gekennzeichnet dadurch, dass** das Polymer (A) ein acrylisches Polyol mit einem Molekulargewicht zwischen 1000 und 5000 ist.

7. Das Verfahren gemäß einem der voranstehenden Ansprüche, **gekennzeichnet dadurch, dass** die Komponente (B) ein Formaldehyd-Melamin-Harz ist.

8. Das Verfahren gemäß einem der voranstehenden Ansprüche, **gekennzeichnet dadurch, dass** die Komponente (C) das Produkt der Polykondensation eines aliphatischen oder cycloaliphatischen Di- oder Triisocyanat ist.

9. Das Verfahren gemäß Anspruch 8, **gekennzeichnet dadurch, dass** die Komponente (C) das Produkt der Polykondensation eines Diisocyanats ist.

10. Das Verfahren gemäß einem der voranstehenden Ansprüche, **gekennzeichnet dadurch, dass** die Trockenmasse der Komponente (A), bezogen auf das Gewicht der Komponenten (A), (B), (C) und (D), zwischen 10 bis 60 % beträgt.

11. Das Verfahren gemäß einem der voranstehenden Ansprüche, **gekennzeichnet dadurch, dass** die Trockenmasse der Komponente (D), bezogen auf das Gewicht der Komponenten (A), (B), (C) und (D), zwischen 0 bis 65 % beträgt.

12. Das Verfahren gemäß einem der voranstehenden Ansprüche, **gekennzeichnet dadurch, dass** die Komponente (C) mindestens 50 %, vorzugsweise mindestens 60 % Polyisocyanat-Verbindungen umfassend mindestens eine Biuret-Gruppe, bezogen auf das Gesamtgewicht der Polyisocyanat-Verbindungen, umfasst.

13. Das Verfahren gemäß einem der voranstehenden Ansprüche, **gekennzeichnet dadurch, dass** die Komponente (C) mindestens 15 Gew.-%, vorzugsweise mindestens 30 Gew.-% und besonders bevorzugt mindestens 50 Gew.-% an Verbindungen der Formel (I) umfasst: 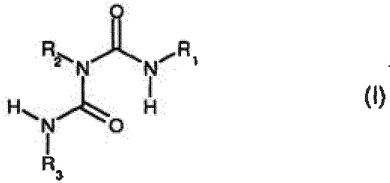 wobei R₁, R₂ und R₃, gleich oder verschieden, lineare, verzweigte oder cyclische C₁-C₂₀ Kohlenwasserstoffketten sind, vorzugsweise umfassend eine Isocyanat-Funktion.

14. Das Verfahren gemäß einem der voranstehenden Ansprüche, **gekennzeichnet dadurch, dass** das Verhältnis der Isocyanat-Funktionen zu Hydroxyl-Funktionen weniger als 3 beträgt.

15. Eine Beschichtungszusammensetzung, **gekennzeichnet dadurch, dass** sie umfasst:
A) 20 bis 50 Gew.-% der Trockenmasse an Polymer enthaltend Hydroxylgruppen; und
B) 3 bis 20 Gew.-% der Trockenmasse an Harz vom Typ Aminformaldehyd;
C) 5 bis 20 Gew.-% der Trockenmasse an Polyisocyanat-Zusammensetzung enthaltend mindestens 50 Mol-% Biuret-Gruppe(n), wobei mindestens 50 Mol-% Isocyanatgruppen mit einem monofunktionellen Maskierungsmittel geschützt sind;
D) 0 bis 30 Gew.-% der Trockenmasse an verschiedenen Zusätzen für Beschichtungen;
E) 10 bis 20 Gew.-% an Lösungsmittel(n).

16. Die Zusammensetzung gemäß Anspruch 15, **gekennzeichnet dadurch, dass** das Maskierungsmittel ausgewählt ist aus Stickstoff-heterocyclischen Verbindungen.

17. Die Zusammensetzung gemäß Anspruch 15, **gekennzeichnet dadurch, dass** das Maskierungsmittel ein Pyrazol ist, wahlweise substituiert mit einem oder mehreren Substituenten.

18. Die Zusammensetzung gemäß Anspruch 15, **gekennzeichnet dadurch, dass** das Maskierungsmittel 3,5-Dimethylpyrazol ist.

19. Die Zusammensetzung gemäß Anspruch 15, **gekennzeichnet dadurch, dass** das Polymer (A) ein acrylisches Polyol mit einem Hydroxyl-Gehalt zwischen 1 und 5 g/100 g, vorzugsweise zwischen 3,5 und 4,5 g/100 g der Trockenmasse des Polymers ist.

20. Die Zusammensetzung gemäß Anspruch 15, **gekennzeichnet dadurch, dass** das Polymer (A) ein acrylisches Polyol mit einem Molekulargewicht zwischen 30000 und 5000 ist.

21. Die Zusammensetzung gemäß Anspruch 15, **gekennzeichnet dadurch, dass** die Komponente (B) ein Formaldehyd-Melamin-Harz ist.

22. Die Zusammensetzung gemäß Anspruch 15, **gekennzeichnet dadurch, dass** die Komponente (C) das Produkt der Polykondensation eines aliphatischen oder cycloaliphatischen Di- oder Triisocyanats ist.

23. Die Zusammensetzung gemäß Anspruch 22, **gekennzeichnet dadurch, dass** die Komponente (C) das Produkt der Polykondensation eines Diisocyanats ist.

24. Die Zusammensetzung gemäß Anspruch 15, **gekennzeichnet dadurch, dass** die Komponente (C) mindestens 50 %, vorzugsweise mindestens 60 % Polyisocyanat-Verbindungen umfassend mindestens eine Biuret-Gruppe, bezogen auf das Gesamtgewicht der Polyisocyanat-Verbindungen, umfasst.

25. Die Zusammensetzung gemäß einem der Ansprüche 15 bis 24, **gekennzeichnet dadurch, dass** die Komponente (C) mindestens 15 Gew.-%, vorzugsweise mindestens 30 Gew.-% und besonders bevorzugt mindestens 50 Gew.-% an Verbindungen der Formel (I) umfasst: 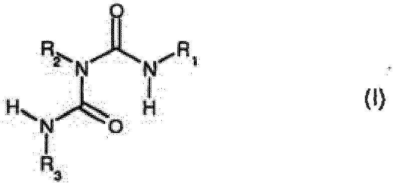 wobei R₁, R₂ und R₃, gleich oder verschieden, lineare, verzweigte oder cyclische C₁-C₂₀ Kohlenwasserstoffketten sind, vorzugsweise umfassend eine Isocyanat-Funktion.

26. Die Zusammensetzung gemäß einem der Ansprüche 15 bis 25, **gekennzeichnet dadurch, dass** das Verhältnis der Isocyanat-Funktionen zu Hydroxyl-Funktionen weniger als 3 beträgt.

## Claims

1. A method for producing a coating having a high hardness, a high impact strength and a high resistance to chemical attack, **characterized in that** it comprises :
- the application, to a substrate, of a blend for simultaneous or successive addition, comprising:
A) from 20 to 50% by weight of solid content of a polymer containing hydroxyl groups;
B) from 3 to 20% by weight of solid content of an amine-formaldehyde-type resin;
C) from 5 to 20% by weight of solid content of a polyisocyanate composition containing at least 50 mol% of one or more biuret group(s), in which at least 50 mol% and up to 100 mol% of the isocyanate groups are protected using a monofunctional blocking agent;
D) from 0 to 30% by weight of solid content of various coating additives
E) from 0 to 20% by weight of solvent(s);
- and the heating of said substrate to a temperature allowing said components to be crosslinked.

2. The method as claimed in either of the preceding claims, **characterized in that** the blocking agent is chosen from heterocyclic nitrogen compounds.

3. The method as claimed in claim 2, **characterized in that** the blocking agent is a pyrazole, optionally substituted with one or more substituents.

4. The method as claimed in claim 3, **characterized in that** the blocking agent is 3,5-dimethylpyrazole.

5. The method as claimed in claim 1, **characterized in that** polymer (A) is an acrylic polyol having a hydroxyl content of between 1 and 5 g/100 g, preferably between 3.5 and 4.5 g/100 g of polymer solids content.

6. The method as claimed in any one of the preceding claims, **characterized in that** polymer (A) is an acrylic polyol having a molecular weight of between 1 000 and 5 000.

7. The method as claimed in any one of the preceding claims, in which constituent (B) is a melamine-formaldehyde resin.

8. The method as claimed in any one of the preceding claims, in which component (C) is the product obtained from polycondensation of an aliphatic or cycloaliphatic diisocyanate or triisocyanate.

9. The method as claimed in claim 8, **characterized in that** component (C) is the product obtained from polycondensation of a diisocyanate.

10. The method as claimed in any one of the preceding claims, **characterized in that** the solids content of component (A) is between 10 and 60% with respect to the weight of components (A), (B), (C) and (D).

11. The method as claimed in any one of the preceding claims, **characterized in that** the solids content of component (D) is between 0 and 65% with respect to the weight of components (A), (B), (C) and (D).

12. The method as claimed in any one of the preceding claims, **characterized in that** component (C) comprises at least 50%, advantageously at least 60%, of polyisocyanate compounds that include at least one biuret group with respect to the total weight of the polyisocyanate compounds.

13. The method as claimed in any one of the preceding claims, **characterized in that** component (C) comprises at least 15%, advantageously at least 30% and preferably at least 50%, by weight of compounds of formula (I): 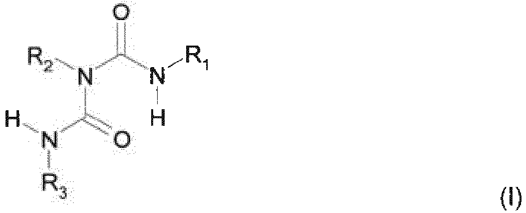 in which R₁, R₂ and R₃, which are identical or different, are linear, branched or cyclic C₁-C₂₀ hydrocarbon chains that advantageously include an isocyanate functional group.

14. The method as claimed in any one of the preceding claims, **characterized in that** the ratio of isocyanate functional groups to hydroxyl functional groups is less than 3.

15. A coating composition, **characterized in that** it comprises:
A) from 20 to 50% by weight of solids content of a polymer containing hydroxyl groups; and
B) from 3 to 20% by weight of solids content of a resin of the amine-formaldehyde type;
C) from 5 to 20% by weight of solids content of a polyisocyanate composition containing at least 50 mol% of one or more biuret groups, in which at least 50 mol% of the isocyanate groups are protected using a monofunctional blocking agent;
D) from 0 to 30% by weight of solids content of various additives for the coating; and
E) from 10 to 20% by weight of one or more solvents.

16. The composition as claimed in claim 15, **characterized in that** the blocking agent is chosen from heterocyclic nitrogen compounds.

17. The composition as claimed in claim 15, **characterized in that** the blocking agent is a pyrazole optionally substituted with one or more substituents.

18. The composition as claimed in claim 15, **characterized in that** the blocking agent is 3,5-dimethylpyrazole.

19. The composition as claimed in claim 15, **characterized in that** polymer (A) is an acrylic polyol having a hydroxyl content of between 1 and 5 g/100 g, preferably between 3.5 and 4.5 g/100 g, of polymer solids content.

20. The composition as claimed in claim 15, **characterized in that** polymer (A) is an acrylic polyol having a molecular weight of between 30 000 and 5 000.

21. The composition as claimed in claim 15, **characterized in that** component (B) is a melamine-formaldehyde resin.

22. The composition as claimed in claim 15, **characterized in that** component (C) is the product obtained from polycondensation of an aliphatic or cycloaliphatic diisocyanate or triisocyanate.

23. The composition as claimed in claim 22, **characterized in that** component (C) is the product obtained from polycondensation of a diisocyanate.

24. The composition as claimed in claim 15, **characterized in that** component (C) comprises at least 50%, advantageously at least 60%, of polyisocyanate compounds that include at least one biuret group with respect to the total weight of the polyisocyanate compounds.

25. The composition as claimed in any one of claims 15 to 24, **characterized in that** component (C) comprises at least 15%, advantageously at least 30% and preferably at least 50%, by weight of compounds of formula (I): 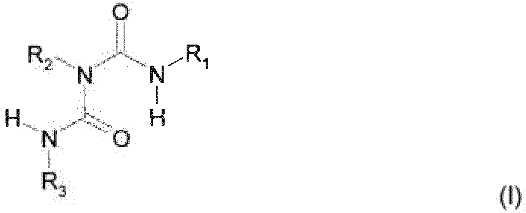 in which R₁, R₂ and R₃, which are identical or different, are linear, branched or cyclic C₁-C₂₀ hydrocarbon chains that advantageously include an isocyanate functional group.

26. The composition as claimed in any one of claims 15 to 25, **characterized in that** the ratio of isocyanate functional groups to hydroxyl functional groups is less than 3.
